# EUROPÄISCHE PATENTSCHRIFT

(11) **EP 2 502 657 B1**
(45) Veröffentlichungstag und Bekanntmachung des Hinweises auf die Patenterteilung: **19.10.2016**
(21) Anmeldenummer: 12004066.2
(22) Anmeldetag: 03.11.2009
(51) Int. Cl.: B01D 29/21, B01D 35/153

(54) **Filtervorrichtung**
Filter device
Dispositif de filtre

(30) Priorität: 05.02.2009 DE 102009007389
(43) Veröffentlichungstag der Anmeldung: 26.09.2012
(62) Teilanmeldung aus: 09759658.9
(73) Patentinhaber: Hydac Filtertechnik GmbH, 66280 Sulzbach/Saar (DE)
(72) Erfinder: Sakraschinsky, Michael, 66386 St. Ingbert (DE); Hennes, Stefan, 66540 Hangard (DE)
(74) Vertreter: Bartels & Partner

(56) Entgegenhaltungen:
- DE-A1-102004 014 149
- DE-A1-102005 046 783
- US-A- 3 297 162
- US-A- 5 490 929

## Beschreibung

Die Erfindung betrifft eine Filtervorrichtung.

Derartige Filtervorrichtungen sind in einer Vielzahl von Bau- und Ausführungsformen auf dem Markt frei erhältlich. Sie dienen dabei unter anderem dazu, Verschmutzungen in Fluiden, wie Hydrauliköl, aus diesen heraus zu filtrieren. Verschmutzungen des Hydrauliköles erfolgen bei der Montage und bei der Inbetriebnahme der jeweiligen Hydraulikanlage, und neben dieser Anfangsverschmutzung kann es zu Verschmutzungen während des Betriebes kommen, beispielsweise durch Eindringen von Schmutz am Hydrauliktank aufgrund unzureichender Tankbelüftung, Rohrdurchführungen, Kolbenstangenabdichtungen und dergleichen mehr. Sofern es bei Hydraulikanlagen von Arbeitsmaschinen, wie Erdbewegungsmaschinen, Baggern oder dergleichen, zu Verschmutzungen innerhalb des im Hydrauliktank bevorrateten Fluids kommt, kann es zweckmäßig sein, die Filtration unmittelbar im Bereich des Hydrauliktanks zu veranlassen, beispielsweise indem man die Filtervorrichtung direkt in den Tank einbaut, wobei das aus dem Tankinhalt entnommene Hydrauliköl zur Abfiltrierung von Verschmutzungen direkt einem Filterelement zugeführt wird, das beispielsweise in einem Gehäuse in der Art einer Patrone aufgenommen ist, wobei das abgereinigte Fluid dann über die Anschlusseinrichtung wieder dem Tankinhalt zugeführt wird. Wenn beim Betrieb derartiger Vorrichtungen das Filtermedium verbraucht ist, so dass ein Wechsel des beispielsweise patronenartig gestalteten Gehäuses für den Ersatz durch ein ein frisches Filtermedium enthaltendes Gehäuse erforderlich ist, kann es zweckmäßig sein, Fluidverbindungen an Anschlussbereichen des Filtergehäuses abzusperren. Dadurch ist die Gefahr vermieden, dass beim Abbau oder Ausbau des Gehäuses Restmengen an Fluid als eine Art Leckölstrom aus dem Filtergehäuse austreten, was zu Verschmutzungsproblemen in der Umgebung führt.

Im Hinblick auf diese Problematik ist in DE 10 2004 014 149 B4 eine Lösung für eine in einen Fluidtank eingebaute Filtervorrichtung offenbart, bei der eine durch Drehen eines Drehschiebers betätigbare Absperreinrichtung vorhanden ist. Der Drehschieber ist an einer im Fluidtank befindlichen Anschlussplatte drehbar gelagert und gibt in einer Freigabe-Drehposition einen Fluideinlass, über den über eine Einlauföffnung am Filtergehäuse abzureinigendes Fluid zur Schmutzseite gelangt, sowie eine Austrittsöffnung der Anschlussplatte frei, über die abgereinigtes Fluid von der Reinseite des Filtergehäuses durch eine Auslauföffnung des Filtergehäuses austritt. Sowohl an der Einlauföffnung als auch der Auslauföffnung des Filtergehäuses befindet sich ein in die Schließstellung vorgespanntes Tellerventil, das durch am Drehschieber vorstehende Steuernasen bei der Freigabe-Drehposition des Drehschiebers in die jeweilige Freigabestellung steuerbar sind.

US 5 490 929 offenbart einen Reiniger für einen Nebelapparat, um Nebel durch einen schnellen Flüssigkeitsfluss von einem Filter zu entfernen. Der Reiniger umfasst ein zylindrisches Gehäuse mit einem Ventilkörper, der durch eine Feder auf einen Ventilsitz gedrückt ist, und mit einem zylindrischen, netzartigen Filter, der um den Ventilkörper und die Feder herum angeordnet ist. Ein Ende des netzartigen Filters ist an den Ventilsitz gedrückt, wobei das andere Ende durch einen Federsitz getragen ist. Der schnelle Flüssigkeitsfluss durchströmt den netzartigen Filter und entfernt dabei den den netzartigen Filter zusetzenden Nebel.

Eine Filtervorrichtung der eingangs genannten Art ist aus DE 10 2005 046 783 A1 bekannt. Die bekannte Filtervorrichtung dient zur Filterung und/ oder Trocknung eines die Vorrichtung durchfließenden Kältemittels und weist einen Blockeinsatz aus einem das Kältemittel filternden und/oder trocknenden Material, wie ein Molekularsieb oder aktiviertes Aluminiumoxid, auf. Der Blockeinsatz ist mit Hilfe eines Einsatzhalters, umfassend zwei Einsatzhalterabschnitte, im Gehäuse der Filtervorrichtung fixiert. Jeder Einsatzhalterabschnitt weist ein Rückschlagventil zur Steuerung des Kältemittelflusses auf, welches durch eine Abdeckplatte gebildet ist, die durch eine Feder vorgespannt mehrere Öffnungen der zugeordneten Grundplatte des jeweiligen Einsatzhalterabschnittes verschließt. Die jeweilige Abdeckplatte ist an der zum Inneren des Blockeinsatzes weisenden Seite der Grundplatte angeordnet und verschiebbar an einem an der Grundplatte fest verankerten Lagerstift gelagert, welcher sich in Richtung der Längsmittelachse erstreckt und in das Innere des Blöckeinsatzes hineinragt. Am Lagerstift ist weiter die die jeweilige Abdeckplatte vorspannende Feder angeordnet.

Ausgehend von diesem Stand der Technik stellt sich die Erfindung die Aufgabe, eine Filtervorrichtung der besagten Art zur Verfügung zu stellen, die sich durch eine besonders einfache Bauweise und Bedienungsfreundlichkeit auszeichnet.

Durch die US 3 297 162 wird eine Filtervorrichtung aufgezeigt, bei der in ein Gehäuse ein Filterelement eingesetzt ist, bei dem zwischen Aufnahmeteilen ein Filtermedium angeordnet ist. Das Filtermedium umgibt ein Stützrohr, das einen Innenraum definiert. Im Innenraum ist ein Federgehäuse vorgesehen, in dem eine Feder angeordnet ist, die ein Verschlussteil gegen einen Fluidauslass vorspannt.

Erfindungsgemäß ist diese Aufgabe durch eine Filtervorrichtung gelöst, die die Merkmale des Patentanspruches 1 in seiner Gesamtheit aufweist.

Die Filtervorrichtung umfasst zumindest ein Filterelement, wobei das Filterelement eine als Ganzes auswechselbare Baueinheit in der Art einer Filterpatrone bildet, wobei das Filterelement ein Abschlussteil aufweist, wobei das Filterelement ein zwischen zwei Aufnahmeteilen angeordnetes Filtermedium sowie eine an dem unteren Aufnahmeteil befindliche Anschlusseinrichtung für eine Fluidverbindung mit einer Fluideinrichtung, insbesondere einem Fluidtank, mit einem an der Anschlusseinrichtung angeordneten Verschlussteil enthält, das durch Einwirkung eines ersten Energiespeichers für eine vom oberen Aufnahmeteil weg verlaufende Bewegung in eine die Anschlusseinrichtung sperrende Schließstellung vorgespannt ist, wobei das Filterelement einen weiteren, zweiten Energiespeicher zur Erzeugung einer Relativbewegung zwischen dem unteren Aufnahmeteil und einem Abschlussteil des Filterelements aufweist, und wobei das Filterelement eine Dichteinrichtung aufweist, die zwischen dem unteren Aufnahmeteil für das Filtermedium und dem Abschlussteil des Filterelements Durchgänge des Abschlussteils abdichtend wirkt, sobald das Abschlussteil und das untere Aufnahmeteil unter dem Einfluss des zweiten Energiespeichers in Anlage miteinander sind, wobei das Filtermedium ein einen inneren Filterhohlraum definierendes, fluiddurchlässiges Stützrohr umgibt, in das sich, von einer ein Bestandteil der Anschlusseinrichtung bildenden zentralen Öffnung des unteren Aufnahmeteiles ausgehend, ein Federgehäuse hinein erstreckt, an dem sich eine als erster Energiespeicher dienende Druckfeder abstützt, deren anderes Ende das im Federgehäuse verschiebbar geführte Verschlussteil in die am Öffnungsrand der zentralen Öffnung anliegende Schließstellung vorspannt, wobei das Filtermedium für die Bewegung des unteren Aufnahmeteiles relativ zum Abschlussteil in einer Umhüllung des Filterelements verschiebbar ist, die in der Nähe des oberen Aufnahmeteiles ein geschlossenes Ende aufweist und am unteren Ende durch das ein Teil der Umhüllung bildende Abschlussteil derart abgeschlossen ist, dass bei abdichtendem Aneinanderliegen von diesem und dem unteren Aufnahmeteil ein fluiddichter Einschluss des zwischen Außenseite des Filtermediums und der Umhüllung befindlichen Raumes gebildet ist.

Sämtliche Komponenten der Sperreinrichtung, durch die die Fluidverbindungen am Anschlussteil des Filterelementes unterbindbar sind, sind baulich dem unteren Aufnahmeteil des Filterelementes zugeordnet und so ausgelegt, dass sie durch Einwirkung der ihnen zugeordneten Energiespeicher selbsttätig sperrend wirken. Im Vergleich zur erwähnten, bekannten Lösung mit einem an der betreffenden Fluideinrichtung, wie dem Fluidtank, vorgesehenen Drehschieber ergibt sich nicht nur der Vorteil der vereinfachten, kostengünstig herstellbaren Bauweise, sondern die Funktion erfolgt unabhängig von an der betreffenden Fluideinrichtung bewegbaren Steuerteilen, wie dem Drehschieber der erwähnten Lösung, so dass sich auch für die Fluideinrichtung eine vereinfachte Bauweise ergibt und die Bedienung einfach und bequem ist.

Das Filtermedium umgibt ein einen inneren Filterhohlraum definierendes fluiddurchlässiges Stützrohr, in das sich, von einer ein Bestandteil der Anschlusseinrichtung bildenden zentralen Öffnung des unteren Aufnahmeteiles ausgehend, ein Federgehäuse in das Stützrohr hinein erstreckt, wobei sich am Federgehäuse eine als erster Energiespeicher dienende Druckfeder abstützt, deren anderes Ende das im Federgehäuse verschiebbar geführte Verschlussteil in seine am Öffnungsrand der zentralen Öffnung anliegende Schließstellung vorspannt. Die das Verschlussteil aufweisende Sperreinrichtung ist daher, einschließlich des zugehörigen Energiespeichers, in den Filterhohlraum integriert, wodurch sich eine kompakte Bauweise des Filterelementes ergibt.

Somit bildet das Filterelement eine Art Filterpatrone, die für den Austausch verbrauchten Filtermediums als Ganzes einfach und bequem ausgebaut und eingebaut werden kann.

Der zweite Energiespeicher kann mit Vorteil durch eine Druckfeder gebildet sein, die zwischen dem geschlossenen Ende der Umhüllung und dem oberen Aufnahmeteil eingespannt ist.

Hierbei kann mit Vorteil die Anordnung so getroffen sein, dass ein für die Bildung einer Fluidverbindung in Zusammenwirkung mit der Anschlusseinrichtung vorgesehener Anschlussstutzen der zugeordneten Fluideinrichtung in die zentrale Öffnung des unteren Aufnahmeteils einfahrbar und randseitig mit zumindest einem Steuerteil versehen ist, das sich im Zuge der Einfahrbewegung am Verschlussteil abstützt.

Wenn hierbei die die Druckfedern so ausgelegt sind, dass die als erster Energiespeicher dienende Feder eine steifere Kennlinie besitzt als die den zweiten Energiespeicher bildende Druckfeder, kann zum Beenden der dichtenden Anlage des unteren Aufnahmeteiles an der Abschlusseinrichtung und bei Anlage des Steuerteiles des Anschlussstutzens am Verschlussteil die Umhüllung durch Spannen der den zweiten Energiespeicher bildenden Druckfeder verschoben werden, was einfach dadurch geschehen kann, dass der Bediener beim Einbauen eines neuen Filterelementes auf die Umhüllung drückt, um das Filterelement einzuschieben. Wird die Einschub- oder Einfahrbewegung über das Erreichen der Anlage des Steuerteiles am Verschlussteil hinausgehend fortgesetzt, bis die den zweiten Energiespeicher bildende Druckfeder vollständig zusammengedrückt ist, erfolgt ein weiteres Einfahren des Anschlussstutzens in die zentrale Öffnung der Anschlusseinrichtung, wobei das Verschlussteil von dem daran anliegenden Steuerteil des Anschlussstutzens gegen die Einwirkung der den ersten Energiespeicher bildenden Druckfeder nunmehr aus der Schließstellung bewegbar ist. Im Zuge einer in einer Richtung erfolgenden Einschub- oder Einfahrbewegung des Filterelementes werden daher selbsttätig beide Sperreinrichtungen am Filterelement in die Freigabestellung gesteuert, nämlich durch Aufheben der Abdichtung zwischen unterem Aufnahmeteil und Abschlussteil und zwischen Verschlussteil und Anschlusseinrichtung am unteren Aufnahmeteil. Hinsichtlich der Zuordnung der Filtervorrichtung zu einer Fluideinrichtung, wie einem Fluidtank, kann die Anordnung mit Vorteil so getroffen sein, dass die Umhüllung für das Einsetzen und Herausnehmen längs der Innenwand eines Außengehäuses der Vorrichtung, in dem der Anschlussstutzen unbewegbar festgelegt ist, am Außenumfang des Abschlussteiles verschiebbar geführt ist und dass die Innenwand einen ersten Verschiebeabschnitt aufweist, der an einer Übergangsstelle in einen zweiten Dichtungsabschnitt am Ende des Verschiebeweges übergeht, an dem der Innendurchmesser für die abdichtende Zusammenwirkung mit einer am Abschlussteil befindlichen Radialdichtung verringert ist. Somit gestaltet sich das Einbauen und Herausnehmen des Filterelementes besonders einfach und bequem, indem innerhalb des Verschiebeabschnittes eine reibungsarme Verschiebebewegung ermöglicht ist, während nach Überlaufen der Übergangsstelle am Ende des Verschiebeweges eine gute Abdichtung des Außenumfanges des Abschlussteiles sichergestellt ist.

Bei besonders vorteilhaften Ausführungsbeispielen ist das Außengehäuse in einen Fluidtank einbaubar, mit dessen Innenraum es über den Anschlussstutzen und über zum Abschlussteil der Filterpatrone führende Fluiddurchgänge in Funktionsverbindung ist.

Gegenstand der Erfindung ist auch eine Fluideinrichtung, insbesondere Fluidtank, mit einer Filtervorrichtung gemäß einem der Patentansprüche 1 bis 7.

Nachstehend ist die Erfindung anhand eines in der Zeichnung dargestellten Ausführungsbeispieles im Einzelnen erläutert. Es zeigen:
- Fig. 1: einen vereinfacht dargestellten Längsschnitt eines Ausführungsbeispieles der Filtervorrichtung, wobei das Filterelement zur Bildung einer sogenannten In-Tank-Vorrichtung für den Einbau in einem Fluidtank vorgesehen ist, von dem lediglich ein oberer Tankwandabschnitt mit durch eine Einbauöffnung darin eingesetztem Außengehäuse der Vorrichtung zu sehen ist und wobei das Filterelement am Beginn eines Einbauvorganges am Anfang seiner Einfahrbewegung in das Außengehäuse dargestellt ist;
- Fig. 2: eine der Fig. 1 entsprechende Schnittdarsfellung, wobei die Einfahrbewegung des Filterelementes weiter fortgesetzt, dieses jedoch noch nicht vollständig eingebaut ist;
- Fig. 3: eine den Fig. 1 und 2 entsprechende Schnittdarstellung, in der die weiter fortgeschrittene Einfahrbewegung bei noch nicht vollständigem Einbauvorgang dargestellt ist; und
- Fig. 4: eine entsprechende Schnittdarstellung, wobei der nach abgeschlossenem Einbauvorgang erreichte Funktionszustand dargestellt ist.

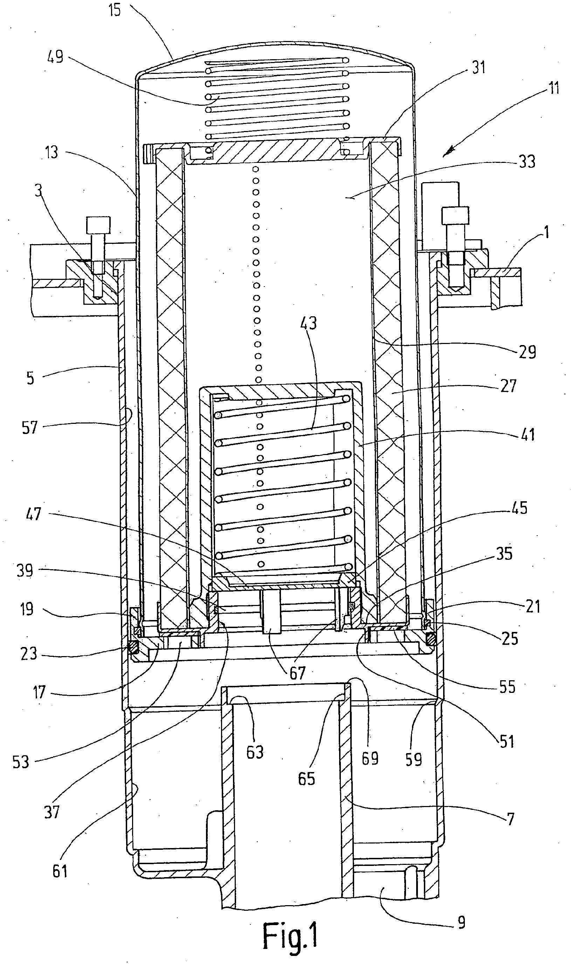

Nachstehend ist die Erfindung anhand eines Beispieles erläutert, bei dem die Filtervorrichtung eine sogenannte In-Tank-Filtervorrichtung bildet, wobei das Filterelement mit einer Fluideinrichtung in Form eines Fluidtanks in Verbindung ist. In der Zeichnung sind vom Fluidtank lediglich ein Abschnitt seiner oberen Tankwand 1 mit einer Einbauöffnung 3 dargestellt, über die ein Außengehäuse 5, das an der Tankwandöffnung 3 offen ist, in den Tank eingebaut ist. Das Außengehäuse 5 ist an seinem unteren Ende über einen zur Gehäuselängsachse konzentrischen Anschlussstutzen 7 und einen weiteren Fluiddurchgang 9 mit dem Inhalt des Fluidtanks in Verbindung. Das kreiszylindrische Außengehäuse 5 bildet mit seiner Innenwand eine Gleitführung für das Einfahren und Ausfahren eines in Fig. 1 als Ganzes mit 11 bezeichneten Filterelementes. Dieses bildet eine als Ganzes auswechselbare Baueinheit in der Art einer sogenannten Filterpatrone. Diese weist eine Umhüllung 13 in Form eines Hohlzylinders auf, der am in der Zeichnung oben liegenden Ende 15 unter Bildung einer gewölbten Endfläche geschlossen ist. Am gegenüberliegenden, unteren Ende weist die Umhüllung 13 ein Abschlussteil 17 in Form eines aus Kunststoff pressgeformten Ringkörpers auf, der am Außenumfang einen axial an der Außenseite der Umhüllung 13 überstehenden Ringrand 19 bildet, an dessen Innenwand durch eine Einbördelung 21 die feste Verbindung mit dem Ende der Umhüllung 13 gebildet ist. Der Außenumfang des Ringrandes 19 bildet eine Gleitfläche, an der das Filterelement 11 an der Innenwand des Außengehäuses 5 verschiebbar geführt ist, wobei die Abdichtung durch eine Radialdichtung 23 am Abschlussteil 17 gebildet ist. An der Innenseite des axial vorstehenden Ringrandes 19 befindet sich ein weiteres Dichtelement 25 zur Abdichtung gegenüber der Umhüllung 13.

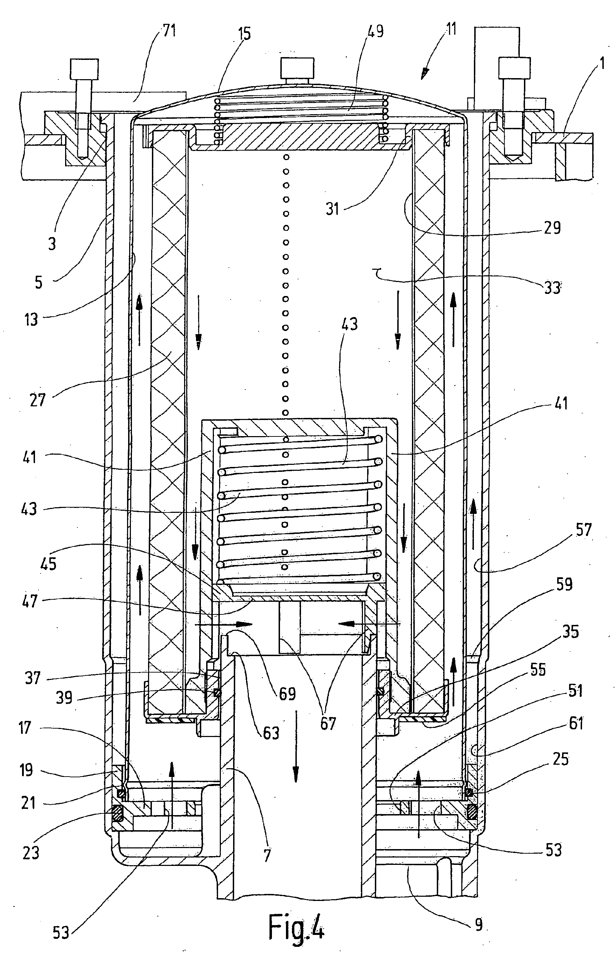

Im Inneren der so gebildeten Filterpatrone befindet sich ein Filtermedium 27 in Form einer ein fluiddurchlässiges Stützrohr 29 umgebenden Filtermatte. Das obere Ende des Filtermediums 27 mit dem zugeordneten Ende des Stützrohres 29 sind von einem oberen Aufnahmeteil 31 eingefaßt, das den innerhalb des Stützrohres 29 befindlichen inneren Filterhohlraum 33 am oberen Ende verschließt und aus Kunststoff pressgeformt ist. Am unteren Ende sind Filtermedium 27 und Stützrohr 29 durch ein unteres Aufnahmeteil 35 eingefaßt, das durch einen aus Kunststoff pressgeformten Ringkörper gebildet ist. Dieses Aufnahmeteil 35 bildet mit seiner zentralen Öffnung 37 eine Anschlusseinrichtung, die im Funktionszustand der Vorrichtung, der in Fig. 4 dargestellt ist, worauf unten näher eingegangen ist, die Fluidverbindung mit dem Anschlussstutzen 7 und damit dem Fluidtank herstellt. Zur Abdichtung der Fluidverbindung befindet sich an der Innenwand der Öffnung 37 ein Dichtelement 39. Vom Ringraum zwischen Innenseite des Stützrohres 29 und der die Öffnung 37 umgebenden Wand ausgehend erstreckt sich ein Federgehäuse 41 in den inneren Filterhohlraum 33. In dem Federgehäuse 41, das mehrere, in der Zeichnung nicht dargestellte Wanddurchbrüche aufweist, ist eine hier als erster Energiespeicher bezeichnete Druckfeder 43 angeordnet, die sich einerseits am oberen Ende des Federgehäuses 41 und andererseits an einem Verschlussteil 45 abstützt, das im Federgehäuse 41 gegen die Wirkung der Druckfeder 43 axial verschiebbar ist, die das Verschlussteil 45 normaler Weise in eine Sperrstellung vorspannt, bei der die Anschlusseinrichtung dadurch geschlossen ist, dass das Verschlussteil 45 mit einer federtellerartigen Schließplatte 47 am Öffnungsrand der Öffnung 37 anliegt. Diese Situation ist in Fig. 1 bis 3 gezeigt.

Anstelle eines aus Kunststoff pressgeformten Ringkörpers kann ein solcher auch aus anderen geeigneten Werkstoffen aufgebaut sein, beispielsweise in der Art eines Aluminium-Druckgussteils oder eines Kunststoff-Spritzgussteils.

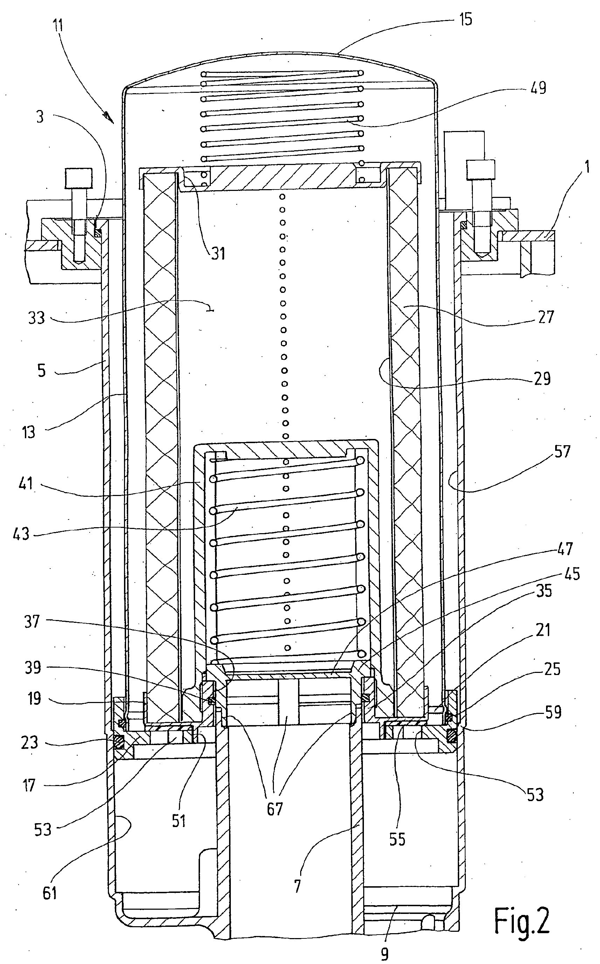

Am oberen Ende des Filterelementes 11 ist eine hier als zweiter Energiespeicher bezeichnete Druckfeder 49 zwischen dem oberen Aufnahmeteil 31 und dem geschlossenen Ende 15 der Umhüllung der 13 eingespannt. Dadurch ist die zwischen den Aufnahmeteilen 31 und 35 gebildete Einheit innerhalb der Umhüllung 13 normalerweise zur Anlage des unteren Aufnahmeteiles 35 am Abschlussteil 17 vorgespannt. Dieser Zustand ist in Fig. 1 und 2 dargestellt. In dem Abschlussteil 17 befinden sich eine zentrale Öffnung 51, die vom Anschlussstutzen 7 durchgreifbar ist, sowie demgegenüber radial weiter außenliegende Durchgänge 53, die, wenn die Kraft der Druckfeder 49 das untere Aufnahmeteil 35 an das Abschlussteil 17 andrückt, gesperrt sind. Um bei dieser Anlage eine Abdichtung an den Durchgängen 53 zu bilden, befindet sich an der Unterseite des unteren Aufnahmeteiles 35 eine Flachringdichtung 55.

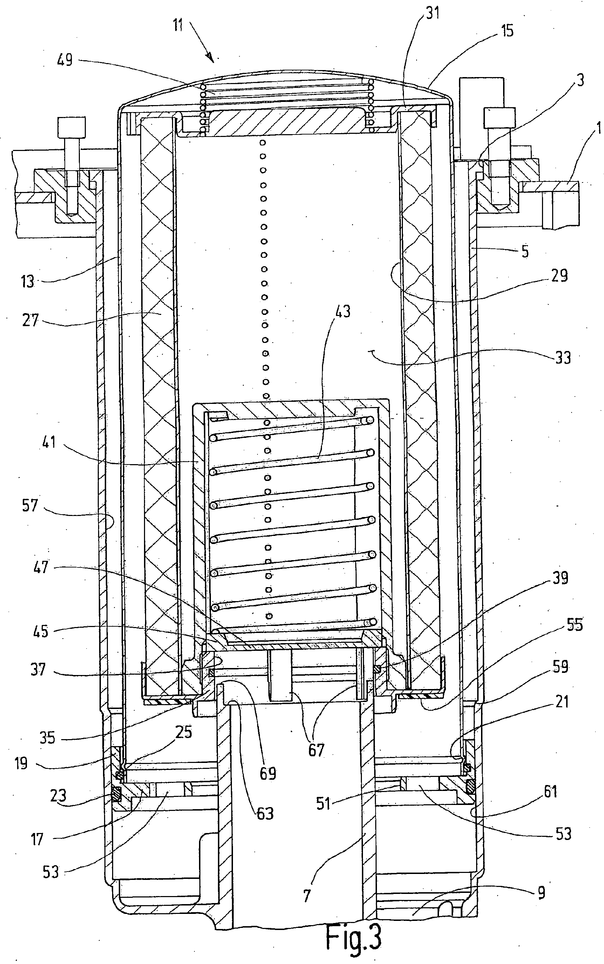

Für den Einbau des Filterelementes 11 wird die Umhüllung 13 in das Außengehäuse 5 eingeschoben, wobei das Abschlussteil 17 mit seinem Außenumfang an der Innenwand des Außengehäuses 5 geführt ist. Diese Innenwand weist für den Anfangsteil der Einfahrbewegung einen Verschiebeabschnitt 57 auf, an den sich an einer Übergangsstelle 59 ein Dichtungsabschnitt 61 verringerten Innendurchmessers anschließt, bei dessen Erreichen im Zuge der Einfahr- oder Einschubbewegung eine sichere Abdichtung durch die Radialdichtung 23 des Abschlussteiles 17 gebildet ist. Dieser Zustand ist in Fig. 3 und 4 gezeigt.

Wie am deutlichsten aus Fig. 1 ersichtlich ist, weist der Anschlussstutzen 7 am oberen Ende eine innere Ringschulter 63 auf, durch die ein randseitiger Ringraum 65 gebildet ist, in den im Zuge der Einfahrbewegung axial nach unten vorstehende Rippen 67 des Verschlussteiles 45 einfahren. Fig. 2 zeigt diesen Zustand.

Wird, wie in Fig. 3 gezeigt, das Filterelement 11 weiter eingeschoben, verbleibt das untere Aufnahmeteil 35 in der gleichen Position, wie sie in Fig. 2 dargestellt ist, wobei eine abgedichtete Fluidverbindung zwischen dem Anschlussstutzen 7 und dem inneren Filterhohlraum 33 hergestellt ist, und zwar über die zentrale Öffnung 37 am Aufnahmeteil 35. Das Aufnahmeteil 35 verbleibt deshalb in seiner Axialposition, weil die Druckfeder 43, die wirkungsstärker ist als die am oberen Ende befindliche Druckfeder 49, das Verschlussteil 45 in seiner Sperrstellung am Rand der Öffnung 37 hält und damit das Aufnahmeteil 35 abstützt. Dadurch wird bei weiter fortgesetzter Einfahrbewegung das Abschlussteil 17 in den Bereich des Dichtungsabschnittes 61 im Außengehäuse 5 verschoben, siehe Fig. 3, wobei die Durchgänge 53 durch Abheben der Flachdichtung 55 freigegeben werden und die obere Druckfeder 49 zusammengedrückt wird.

Wird ausgehend von diesem Zustand das Filterelement 11 weiter in das Außengehäuse 5 eingedrückt, dann wird wegen des Anliegens des oberen Aufnahmeteiles 31 am oberen Ende 15 der Umhüllung 13 die Kraftwirkung der Druckfeder 43 überwunden. Somit wirkt der Anschlusstutzen 7 mit seinem oberen Rand 69 als auf das Verschlussteil 45 über dessen Rippen 67 einwirkendes Steuerteil, das das Verschlussteil 45 gegen die Wirkung der Druckfeder 43 in das Federgehäuse 41 verschiebt, wodurch der in Fig. 4 gezeigte Funktionszustand erreicht ist, bei dem sowohl über die frei gegebenen Durchgänge 53 Fluid zur Außenseite des Filtermediums 27 gelangt, als auch aus dem inneren Filterhohlraum 33 abgereinigtes Fluid an dem in die Freigabestellung gesteuerten Verschlussteil 45 vorbei in den Anschlusstutzen 7 und damit ins Innere des Fluidtanks gelangt. Bei diesem Funktionszustand, bei dem beide Druckfedern 43 und 49 gespannt sind, ist das Filterelement 11 durch einen lediglich in Fig. 4 schematisiert angedeuteten. Deckel 71 in der Einbaulage gesichert. Die im Funktionszustand beim Filtervorgang herrschende Fluidströmung ist in Fig. 4 mit nicht bezifferten Strömungspfeilen verdeutlicht.

Es ist ersichtlich, dass sich die Vorrichtung durch eine besonders gute Bedienungsfreundlichkeit auszeichnet. Für den Vorgang der Auswechslung eines Filterelementes 11 mit verbrauchtem Filtermedium 27 braucht lediglich der Deckel 71 gelöst zu werden. Durch die Wirkung der beiden gespannten Druckfedern 43 und 49 bewegt sich das Filterelement 11 selbsttätig aus der in Fig. 4 gezeigten Funktionsposition zunächst in die in Fig. 3 gezeigte Zwischenposition, wonach unter Entspannen der oberen Druckfeder 49 selbsttätig ein weiteres Ausfahren in die in Fig.. 2 gezeigte Position stattfindet, in der die Filterpatrone so weit aus dem Außengehäuses 5 vorsteht, dass sie bequem ergriffen werden kann. Gleichzeitig sind innerer Filterhohlraum 33 durch das in der Sperrstellung befindliche Verschlussteil 45 geschlossen, und der Raum an der Außenseite des Filtermediums 27 ist am Abschlussteil 17 ebenfalls geschlossen, weil die Flachdichtung 55 von der Druckfeder 49 in Anlage an den Durchgängen 53 des Abschlussteiles 17 gehalten ist.

## Patentansprüche

1. Filtervorrichtung mit zumindest einem Filterelenient (11),
wobei das Filterelement (11) eine als Ganzes auswechselbare Baueinheit in der Art einer Filterpatrone bildet,
wobei das Filterelement (11) ein Abschlussteil (17) aufweist,
wobei das Filterelement (11) ein zwischen zwei Aufnahmeteilen (31, 35) angeordnetes Filtermedium (27) sowie eine an dem unteren Aufnahmeteil (35) befindliche Anschlusseinrichtung für eine Fluidverbindung mit einer Fluideinrichtung, insbesondere einem Fluidtank (1), mit einem an der Anschlusseinrichtung angeordneten Verschlussteil (45) enthält, das durch Einwirkung eines ersten Energiespeichers (43) für eine vom oberen Aufnahmeteil (31) weg verlaufende Bewegung in eine die Anschlusseinrichtung sperrende Schließstellung vorgespannt ist,
wobei das Filterelement (11) einen weiteren, zweiten Energiespeicher (49) zur Erzeugung einer Relativbewegung zwischen dem unteren Aufnahmeteil (35) und dem Abschlussteil (17) des Filterelements (11) aufweist, und
wobei das Filterelement (11) eine Dichteinrichtung (55) aufweist, die zwischen dem unteren Aufnahmeteil (35) für das Filtermedium (27) und dem Abschlussteil (17) des Filterelements (11) Durchgänge (53) des Abschlussteils (17) abdichtend wirkt, sobald das Abschlussteil (17) und das untere Aufnahmeteil (35) unter dem Einfluss des zweiten Energiespeichers (49) in Anlage miteinander sind,
wobei das Filtermedium (27) ein einen inneren Filterhohlraum (33) definierendes, fluiddurchlässiges Stützrohr (29) umgibt, in das sich, von einer ein Bestandteil der Anschlusseinrichtung bildenden zentralen Öffnung (37) des unteren Aufnahmeteiles (35) ausgehend, ein Federgehäuse (41) hinein erstreckt, an dem sich eine als erster Energiespeicher dienende Druckfeder (43) abstützt, deren anderes Ende das im Federgehäuse (41) verschiebbar geführte Verschlussteil (45) in die am Öffnungsrand der zentralen Öffnung (37) anliegende Schließstellung vorspannt,
wobei das Filtermedium (27) für die Bewegung des unteren Aufnahmeteiles (35) relativ zum Abschlussteil (17) in einer Umhüllung (13) des Filterelements (11) verschiebbar ist, die in der Nähe des oberen Aufnahmeteiles (31) ein geschlossenes Ende (15) aufweist und am unteren Ende durch das ein Teil der Umhüllung (13) bildende Abschlussteil (17) derart abgeschlossen ist, dass bei abdichtendem Aneinanderliegen von diesem und dem unteren Aufnahmeteil (35) ein fluiddichter Einschluss des zwischen Außenseite des Filtermediums (27) und der Umhüllung (13) befindlichen Raumes gebildet ist.

2. Filtervorrichtung nach Anspruch 1, **dadurch gekennzeichnet, dass** der zweite Energiespeicher in Form einer Druckfeder (49) zwischen dem geschlossenen Ende (15) der Umfüllung (13) und dem oberen Aufnahmeteil (31) eingespannt ist.

3. Filtervorrichtung nach Anspruch 1 oder 2, **dadurch gekennzeichnet, dass** ein für die Bildung einer Fluidverbindung in Zusammenwirkung mit der Anschlusseinrichtung vorgesehener Anschlussstutzen (7) der zugeordneten Fluideinrichtung in die zentrale Öffnung (37) des unteren Aufnahmeteiles (35) einfahrbar und randseitig mit zumindest einem Steuerteil (63, 69) versehen ist, das sich im Zuge der Einfahrbewegung am Verschlussteil (45) abstützt.

4. Filtervorrichtung nach Anspruch 3, **dadurch gekennzeichnet, dass** zum Beenden der dichtenden Anlage des unteren Aufnahmeteiles (35) am Abschlussteil (17) und bei Anlage des Steuerteiles (63, 69) des Anschlussstutzens (7) am Verschlussteil (45) die Umhüllung (13) durch Spannen der den zweiten Energiespeicher bildenden Druckfeder (49) verschiebbar ist.

5. Filtervorrichtung nach Anspruch 4, **dadurch gekennzeichnet, dass** bei über das Erreichen der Anlage am Verschlussteil (45) hinausgehendem Einfahren des Anschlussstutzens (7) in die zentrale Öffnung (37) der Anschlusseinrichtung das Verschlussteil (45) von dem daran anliegenden Steuerteil (63, 69) des Anschlussstutzens (7) gegen die Einwirkung der den ersten Energiespeicher bildenden Druckfeder (43) aus der Schließstellung bewegbar ist.

6. Filtervorrichtung nach einem der Ansprüche 3 bis 5, **dadurch gekennzeichnet, dass** die Umhüllung (13) für das Einsetzen und Herausnehmen längs der Innenwand eines Außengehäuses (5) der Vorrichtung, in dem der Anschlussstutzen (7) unbewegbar festgelegt ist, am Außenumfang des Abschlussteiles (17) verschiebbar geführt ist und dass die Innenwand einen ersten Verschiebeabschnitt (57) aufweist, der an einer Übergangsstelle (59) in einen zweiten Dichtungsabschnitt (61) am Ende des Verschiebeweges übergeht, an dem der Innendurchmesser für die abdichtende Zusammenwirkung mit einer am Abschlussteil (17) befindlichen Radialdichtung (23) verringert ist.

7. Filtervorrichtung nach Anspruch 6, **dadurch gekennzeichnet, dass** das Außengehäuse (5) in einen Fluidtank (1) einbaubar ist, mit dessen Innenraum es über den Anschlussstutzen (7) und über zum Abschlussteil (17) der Filterpatrone führende Fluiddurchgänge (9) in Funktionsverbindung ist.

8. Fluideinrichtung, insbesondere Fluidtank (1), mit einer Filtervorrichtung gemäß einem der Patentansprüche 1 bis 7.

## Claims

1. A filter apparatus comprising at least one filter element (11),
the filter element (11) forming an assembly in the manner of a filter cartridge that can be replaced as a whole,
the filter element (11) having an end part (17),
the filter element (11) including a filter medium (27) disposed between two receiving parts (31, 35) and a connecting device located on the lower receiving part (35) for fluid connection to a fluid device, in particular a fluid tank (1), with a closure part (45) positioned on the connecting device, which closure part is pre-tensioned into a closed position blocking the connecting device by the effect of a first energy accumulator (43) for a movement running away from the upper receiving part (31),
the filter element (11) having another, second energy accumulator (49) for generating a relative movement between the lower receiving part (35) and the end part (17) of the filter element (11),
the filter element (11) having a sealing device (55) that has a sealing effect upon passages (53) of the end part (17) between the lower receiving part (35) for the filter medium (27) and the end part (17) of the filter element (11) as soon as the end part (17) and the lower receiving part (35) are in contact with one another by the effect of the second energy accumulator (49),
the filter medium (27) surrounding a fluid-permeable support tube (29) defining an inner filter cavity (33) into which a spring housing (41) extends passing from a central opening (37) of the lower receiving part (35) forming a component of the connecting device on which housing a compression spring (43) serving as a first energy accumulator is supported, the other end of which spring pre-tensions the closure part (45) that is moveably guided within the spring housing (41) into the closed position resting against the opening edge of the central opening (37),
for the movement of the lower receiving part (35) relative to the end part (17) the filter medium (27) being able to be moved within a sheath (13) of the filter element (11), which sheath has a closed end (15) close to the upper receiving part (31) and being closed off at the other end by the end part (17) forming part of the sheath (13) such that when said end part and the lower receiving part (35) are lying against one another such as to form a seal, a fluid-tight enclosure of the space located between the outside of the filter medium (27) and the sheath (13) is formed.

2. The filter apparatus according to Claim 1, **characterised in that** the second energy accumulator in the form of a compression spring (49) is clamped between the closed end (15) of the sheath (13) and the upper receiving part (31).

3. The filter apparatus according to Claim 1 or 2, **characterised in that** a connecting piece (7) of the assigned fluid device provided for the formation of a fluid connection in co-operation with the connecting device can be moved into the central opening (37) of the lower receiving part (35) and is provided at the edge with at least one control part (63, 39) that is supported on the closure part (45) over the course of the retracting movement.

4. The filter apparatus according to Claim 3, **characterised in that** in order to end the sealing contact of the lower receiving part (35) on the end part (17) and with support of the control part (63, 69) of the connecting part (7) on the closure part (45), the sheath (13) can be moved by tensioning the compression spring (49) that forms the second energy accumulator.

5. The filter apparatus according to Claim 4, **characterised in that** upon the retraction of the connecting piece (7) beyond reaching contact with the closure part (45) into the central opening (37) of the connecting device, the closure part (45) can be moved by the control part (63, 69) of the connecting piece (7) resting against said closure part out of the closed position against the effect of the compression spring (43) forming the first energy accumulator.

6. The filter apparatus according to any of Claims 3 to 5, **characterised in that** the sheath (13) for insertion and removal along the inner wall of an outer housing (5) of the apparatus in which the connecting piece (7) can be fixed unmoveably is moved displaceably on the outer circumference of the end part (17), and that the inner wall has a first displacing section (57) that passes at a transition point (59) into a second seal section (61) at the end of the path of displacement at which the inner diameter is reduced with a radial seal (23) located on the end part (17) for the sealing interaction.

7. The filter apparatus according to Claim 6, **characterised in that** the outer housing (5) can be incorporated into a fluid tank (1), to the interior of which it is functionally connected by means of the connecting piece (7) and by means of fluid passages (9) leading to the end part (17) of the filter cartridge.

8. A filter device, in particular a fluid tank (1) with a filter apparatus according to any of Claims 1 to 7.

## Revendications

1. Dispositif de filtration ayant au moins un élément (11) filtrant,
l'élément (11) filtrant formant une unité de construction remplaçable en son entier à la manière d'une cartouche de filtre,
l'élément (11) filtrant ayant une partie (17) de fermeture, l'élément (11) filtrant comportant un milieu (27) filtrant disposé entre deux parties (31, 35) de réception ainsi qu'un dispositif de raccordement se trouvant sur la partie (35) de réception inférieure pour une liaison fluidique avec un dispositif à fluide, notamment un réservoir (1) à fluide ayant une partie (45) de fermeture, montée sur le dispositif de raccordement et précontrainte, dans une position de fermeture obturant le dispositif de raccordement, par l'action d'un premier accumulateur (43) d'énergie pour un mouvement s'éloignant de la partie (31) supérieure de réception,
l'élément (11) filtrant ayant un autre deuxième accumulateur (49) d'énergie pour produire un mouvement relatif entre la partie (35) inférieure de réception et la partie (17) de fermeture de l'élément (11) filtrant, et
l'élément (11) filtrant ayant un dispositif (55) d'étanchéité qui rend étanches des passages (53) de la partie (17) de fermeture entre la partie (35) inférieure de réception du milieu (27) filtrant et la partie (17) de fermeture de l'élément (11) filtrant, dès que la partie (17) de fermeture et la partie (35) inférieure de réception sont en contact l'une avec l'autre sous l'influence du deuxième accumulateur (49) d'énergie,
le milieu (27) filtrant entourant un tube (29) support perméable aux fluides, définissant une cavité (33) intérieure de filtre et dans lequel s'étend, à partir d'une ouverture (37) centrale, formant un constituant du dispositif de raccordement, de la partie (35) inférieure de réception, un boîtier (41) de ressort sur lequel s'appuie un ressort (43) de compression, qui sert de premier accumulateur d'énergie et dont l'autre extrémité précontraint, dans la position de fermeture s'appliquant au bord de l'ouverture (37) centrale, la partie (45) de fermeture, guidée à coulissement dans le boîtier (41) de ressort,
le milieu (27) filtrant pouvant, pour le déplacement de la partie (35) inférieure de réception, coulisser par rapport à la partie (17) de fermeture dans une enveloppe (13) de l'élément (11) filtrant qui a, à proximité de la partie (31) supérieure de réception, une extrémité (15) fermée et, à l'extrémité inférieure, est fermée par la partie (17) de fermeture formant une partie de l'enveloppe (13) de manière à ce que, lorsque celle-ci et la partie (35) inférieure de réception s'appliquent l'une à l'autre avec étanchéité, il se forme un confinement étanche aux fluides de l'espace se trouvant entre le côté extérieur du milieu (27) filtrant et l'enveloppe (13).

2. Dispositif de filtration suivant la revendication 1, **caractérisé en ce que** le deuxième accumulateur d'énergie est bandé sous la forme d'un ressort (49) de compression entre l'extrémité (15) fermée de l'enveloppe (13) et la partie (31) supérieure de réception.

3. Dispositif de filtration suivant la revendication 1 ou 2, **caractérisé en ce qu'**une tubulure (7) de raccordement, prévue pour former une liaison fluidique en coopération avec le dispositif de raccordement, du dispositif à fluide associé peut pénétrer dans l'ouverture (37) centrale de la partie (35) inférieure de réception, et est pourvue, du côté du bord, d'au moins une partie (63, 69) de commande, qui s'appuie sur la partie (45) de fermeture au cours du déplacement d'entrée.

4. Dispositif de filtration suivant la revendication 3, **caractérisé en ce que** pour mettre fin au contact étanche de la partie (35) inférieure de réception sur la partie (17) de fermeture et lors de l'application de la partie (63, 69) de commande de la tubulure (7) de raccordement à la partie (45) de fermeture, l'enveloppe (13) peut être déplacée par bandage du ressort (49) de compression formant le deuxième accumulateur d'énergie.

5. Dispositif de filtration suivant la revendication 4, **caractérisé en ce que**, lorsque la tubulure de raccordement entre d'une manière allant au-delà de l'obtention du contact sur la partie (45) de fermeture dans l'ouverture (37) centrale du dispositif de raccordement, la partie (45) de fermeture peut, par la partie (63, 69) de commande s'y appliquant de la tubulure (7) de raccordement, être déplacée hors de la position de fermeture à l'encontre de l'effet du ressort (43) de compression formant le premier accumulateur d'énergie.

6. Dispositif de filtration suivant l'une des revendications 3 à 5, **caractérisé en ce que** l'enveloppe (13) est, pour l'insertion et le retrait le long de la paroi intérieure d'un boîtier (5) extérieur du dispositif, dans lequel la tubulure (7) de raccordement est fixée de manière inamovible, être guidée à coulissement sur le pourtour extérieur de la partie (17) de fermeture, et **en ce que** la paroi intérieure a une première partie (57) de coulissement qui se transforme en un point (59) de transition en une deuxième partie (61) d'étanchéité à la fin du trajet de coulissement, où le diamètre intérieur est diminué pour la coopération avec étanchéité avec une garniture (23) d'étanchéité radiale se trouvant sur la partie (17) de fermeture.

7. Dispositif de filtration suivant la revendication 6, **caractérisé en ce que** le boîtier (5) extérieur peut être mis dans un réservoir (1) à fluide, avec l'espace intérieur duquel il est en liaison fonctionnelle par la tubulure (7) de raccordement et par des passages (9) pour du fluide menant à la partie (17) de fermeture de la cartouche de fluide.

8. Dispositif à fluide, notamment réservoir (1) à fluide ayant un dispositif de filtration suivant l'une des revendications 1 à 7.
